# EUROPEAN PATENT SPECIFICATION

(11) **EP 3 492 219 B1**
(45) Date of publication and mention of the grant of the patent: **26.08.2020**
(21) Application number: 18206658.9
(22) Date of filing: 16.11.2018
(51) Int. Cl.: B23Q 3/06, B23B 41/00

(54) **STATIONARY FIXTURE FOR MACHINING OF ALUMINUM ALLOY WHEEL**
STATIONÄRE SPANNVORRICHTUNG ZUR BEARBEITUNG VON ALUMINIUMLEGIERUNGSRAD
DISPOSITIF DE FIXATION STATIONNAIRE POUR L'USINAGE DE ROUE EN ALLIAGE D'ALUMINIUM

(30) Priority: 30.11.2017 CN 201711235386
(43) Date of publication of application: 05.06.2019
(73) Proprietor: Citic Dicastal Co., Ltd., 066011 Quinhuangdao, Heibei (CN)
(72) Inventor: LIU, Xiao, Qinhuangdao, Heibei 066011 (CN); GUO, Jiandong, Qinhuangdao, Heibei 066011 (CN)
(74) Representative: Gong, Jinping

(56) References cited:
- CN-A- 106 624 927
- DE-C1- 4 339 755

## Description

### Field of the Invention

The present invention relates to the field of automobile engineering, specifically to a wheel fixture.

### Background of the Invention

The machining process for a wheel usually requires three-step machining. After the front, the rim, the center hole and other parts of the wheel are machined, bolt holes and a valve hole need to be machined in the third step, but due to the difference in the outer diameter and width of wheels of different sizes and other parameters, it is difficult to machine different sizes of hubs with a set of fixture. In the actual machining process, whenever wheels of different sizes need to be replaced, a set of parts or even a complete set of fixture needs to be replaced, which increases the production assistance time of the workshop, reduces the production efficiency and increases the labor intensity of workers. If an automatic fixture adapting to different sizes of wheels can be researched and developed, the production efficiency is greatly improved. CN 106 624 927 A discloses a stationary fixture according to the preamble of claim 1.

### Summary of the Invention

The object of the present invention is to provide a wheel fixture that can position and clamp different sizes of wheels and achieves automatic machining.

A stationary fixture for machining of an aluminum alloy wheel according to the invention comprises the features of claim 1, it is composed of a machine tool base, a support I, a rotary joint, an end cover I, nuts, a power shaft I, a sealing ring I, bearings, an end cover II, a sealing ring II, an L-shaped plate I, airtight mechanisms, a power chuck, clamping jaws, a wheel, a support plate I, a linear single-axis robot, a support plate II, an L-shaped plate II, an end cover III, a decelerator I, a power shaft II, a servo motor I, an end cover IV, a support II, a coupling, a connecting plate, a decelerator II, a servo motor II, a positioning column, a hydraulic cylinder I, a base, a movable plate, a dynamic friction plate, a static friction plate, a lip rubber sealing ring, hydraulic cylinders II, guide rails, pressure blocks, positioning plates, a guide rail I and a guide rail II.

The support I and the support II are mounted on the machine tool base 1 by bolts, the power shaft I is mounted inside a bearing seat at the upper end of the support I, a group of bearings is mounted between the bearing seat and the power shaft I, a nut is mounted at the left end of each bearing to position the inner ring of the bearing, the end cover I is mounted on the left side of the bearing seat at the upper end of the support I by screws, the sealing ring I is mounted between the end cover I and the power shaft I, the end cover II is fixed to the right side of the bearing seat at the upper end of the support I by screws, the sealing ring II is mounted between the end cover II and the power shaft I, the L-shaped plate I is mounted on the power shaft I by screws, the dynamic friction plate is mounted on the L-shaped plate I, the static friction plate and the lip rubber sealing ring are mounted at the right end of the support I, the lip rubber sealing ring is connected with an oil passage inside the support I, and the rotary joint 3 is mounted at the left end of the power shaft I.

The decelerator I is mounted inside the support seat at the upper end of the support II, the servo motor I is mounted at the right end of the decelerator I, the end cover IV is mounted at the right end of the support seat at the upper end of the support II by screws, the end cover III is mounted at the left end of the support seat at the upper end of the support II, the power shaft II is mounted at the output end of the decelerator I, and the L-shaped plate II is mounted on the power shaft II by screws.

The base is mounted on the L-shaped plate I and the L-shaped plate II by screws, the hydraulic cylinder I is mounted on the base via the positioning column and screws, the power chuck is mounted on the hydraulic cylinder I, a group of clamping jaws is mounted on the power chuck, the support plate II is mounted on the base by screws, the linear single-axis robot penetrates through the base and is mounted on the support plate II, the output end of the decelerator II is mounted on the output shaft of the linear single-axis robot via the connecting plate and the coupling, the output end of the servo motor II is mounted on the input end of the decelerator II, the support plate I is simultaneously mounted on a slider of the linear single-axis robot and the movable plate, the two groups of airtight mechanisms are mounted on the movable plate, the four positioning plates are mounted on the movable plate, the four guide rails are mounted and fixed on the movable plate, the four groups of hydraulic cylinders II are mounted on the guide rails, and the pressure blocks are mounted at the output ends of the hydraulic cylinders II. The L-shaped plate I is provided with a plurality of oil passages, the oil passages pass through the power shaft I and are connected with a hydraulic source via the rotary joint, an oil passage is processed at the upper end of the support I, and the hydraulic cylinder I and the hydraulic cylinders II are connected to the oil passages on the L-shaped plate I via joints and oil pipes. The guide rail I and the guide rail II are mounted on the bottom plate.

In actual use, after the wheel is placed on the positioning plates of the fixture, the airtight mechanisms determines whether the wheel is at the correct position by the feedback of the pressure generated by the pressing of the wheel and exerted to the airtight mechanisms, the system gives an alarm if wrong, the servo motor II drives the linear single-axis robot through the decelerator II if the position is correct to drive the movable plate to adjust to a suitable height, during this process, the guide rail I, the guide rail II and the linear single-axis robot ensure that the movable plate lifts stably, at this time, the hydraulic cylinder I drives the power chuck to work so that the clamping jaws goes deep into the center hole of the wheel and expand the wheel, and after the wheel is positioned radially and axially, the hydraulic cylinders II drive the pressure blocks to position and clamp the wheel at the determined position. The machine tool spindle drives the tool to machine bolt holes after positioning and clamping, then the servo motor I drives the power shaft II and the L-shaped plate II to rotate to an angle through the decelerator I, at the moment, hydraulic oil compresses the static friction plate and the dynamic friction plate via the oil passage inside the support I to realize an indexing positioning function, and the machine tool spindle drives the tool to machine a valve hole after the angle is fixed.

According to the structural scheme of the present invention, the appropriate height of the movable plate is adjusted by adopting the linear single-axis robot, thereby saving the guiding scheme of a plurality of guide pillars used in the common flexible fixture. Simplifying the structure of the fixture, and achieving the advantages of wide size adaptation range, high adjustment speed, high reliability and the like.

### Brief Description of the Drawings

The embodiments of the present invention will be described in detail below in combination with the accompanying drawings, in which:

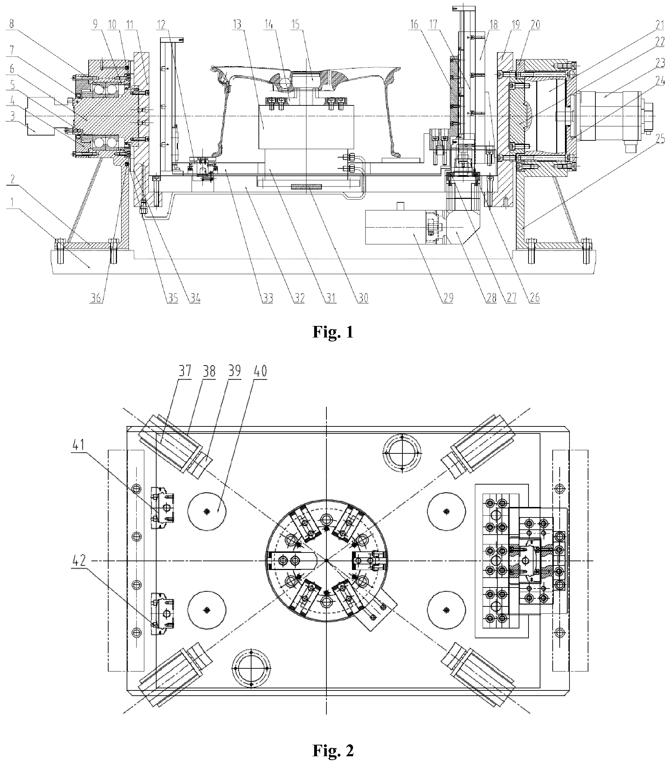

Fig. 1 is a front view of a stationary fixture for machining of an aluminum alloy wheel according to the present invention;
Fig. 2 is a partial top view of the stationary fixture for machining of an aluminum alloy wheel according to the present invention;

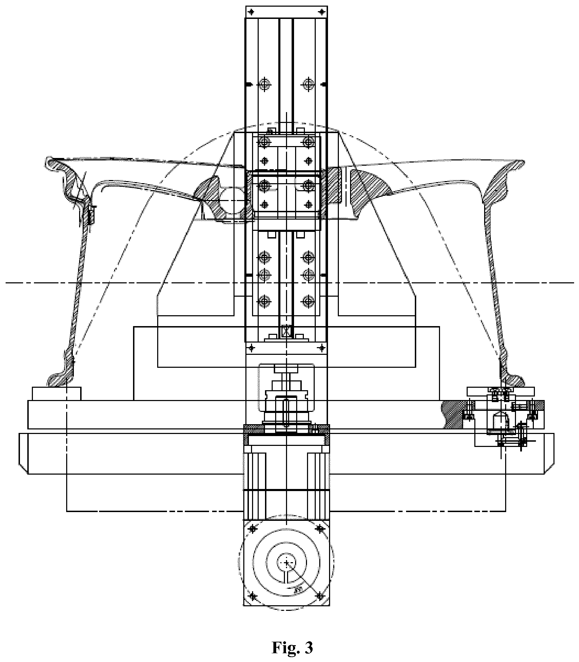

Fig. 3 is a partial left view of the stationary fixture for machining of an aluminum alloy wheel according to the present invention.

In which: 1-machine tool base, 2-support I, 3-rotary joint, 4-end cover I, 5-nut, 6-power shaft I, 7-sealing ring I, 8-bearing, 9-end cover II, 10-sealing ring II, 11-L-shaped plate I, 12-airtight mechanism, 13-power chuck, 14-clamping jaw, 15-wheel, 16-support plate I, 17-linear single-axis robot, 18-support plate II 19-L-shaped plate II, 20-end cover III, 21-decelerator I, 22-power shaft II, 23-servo motor I, 24-end cover IV, 25-support II, 26-coupling, 27-connecting plate, 28-decelerator II, 29-servo motor II, 30-positioning column, 31-hydraulic cylinder I, 32-base, 33-movable plate, 34-dynamic friction plate, 35-static friction plate, 36-lip rubber sealing ring, 37-hydraulic cylinder II, 38-guide rail, 39-pressure block, 40-positioning plate, 41-guide rail I, 42-guide rail II.

### Detailed Description of the Embodiments

The specific embodiments of the present invention will be further described in detail below in combination with the accompanying drawings.

A stationary fixture for machining of an aluminum alloy wheel is composed of a machine tool base 1, a support I 2, a rotary joint 3, an end cover I 4, nuts 5, a power shaft I 6, a sealing ring I 7, bearings 8, an end cover II 9, a sealing ring II 10, an L-shaped plate I 11, airtight mechanisms 12, a power chuck 13, clamping jaws 14, a wheel 15, a support plate I 16, a linear single-axis robot 17, a support plate II 18, an L-shaped plate II 19, an end cover III 20, a decelerator I 21, a power shaft II 22, a servo motor I 23, an end cover IV 24, a support II 25, a coupling 26, a connecting plate 27, a decelerator II 28, a servo motor II 29, a positioning column 30, a hydraulic cylinder I 31, a base 32, a movable plate 33, a dynamic friction plate 34, a static friction plate 35, a lip rubber sealing ring 36, hydraulic cylinders II 37, guide rails 38, pressure blocks 39, positioning plates 40, a guide rail I 41 and a guide rail II 42.

The support I 2 and the support II 25 are mounted on the machine tool base 1 by bolts, the power shaft I 6 is mounted inside a bearing seat at the upper end of the support I 2, a group of bearings 8 is mounted between the bearing seat and the power shaft I 6, a nut 5 is mounted at the left end of each bearing 8 to position the inner ring of the bearing 8, the end cover I 4 is mounted on the left side of the bearing seat at the upper end of the support I 2 by screws, the sealing ring I 7 is mounted between the end cover I 4 and the power shaft I 6, the end cover II 9 is fixed to the right side of the bearing seat at the upper end of the support I 2 by screws, the sealing ring II 10 is mounted between the end cover II 9 and the power shaft I 6, the L-shaped plate I 11 is mounted on the power shaft I 6 by screws, the dynamic friction plate 34 is mounted on the L-shaped plate I 11, the static friction plate 35 and the lip rubber sealing ring 36 are mounted at the right end of the support I 2, the lip rubber sealing ring 36 is connected with an oil passage inside the support I 2, and the rotary joint 3 is mounted at the left end of the power shaft I 6.

The decelerator I 21 is mounted inside the support seat at the upper end of the support II 25, the servo motor I 23 is mounted at the right end of the decelerator I 21, the end cover IV 24 is mounted at the right end of the support seat at the upper end of the support II 25 by screws, the end cover III 20 is mounted at the left end of the support seat at the upper end of the support II 25, the power shaft II 22 is mounted at the output end of the decelerator I 21, and the L-shaped plate II 19 is mounted on the power shaft II 22 by screws.

The base 32 is mounted on the L-shaped plate I 11 and the L-shaped plate II 19 by screws, the hydraulic cylinder I 31 is mounted on the base 32 via the positioning column 30 and screws, the power chuck 13 is mounted on the hydraulic cylinder I 31, a group of clamping jaws 14 is mounted on the power chuck 13, the support plate II 18 is mounted on the base 32 by screws, the linear single-axis robot 17 penetrates through the base 32 and is mounted on the support plate II 18, the output end of the decelerator II 28 is mounted on the output shaft of the linear single-axis robot 17 via the connecting plate 27 and the coupling 26, the output end of the servo motor II 29 is mounted on the input end of the decelerator II 28, the support plate I 16 is simultaneously mounted on a slider of the linear single-axis robot 17 and the movable plate 33, the two groups of airtight mechanisms 12 are mounted on the movable plate 33, the four positioning plates 40 are mounted on the movable plate 33, the four guide rails 38 are mounted and fixed on the movable plate 33, the four groups of hydraulic cylinders II 37 are mounted on the guide rails 38, and the pressure blocks 39 are mounted at the output ends of the hydraulic cylinders II 37. The L-shaped plate I 11 is provided with a plurality of oil passages, the oil passages pass through the power shaft I 6 and are connected with a hydraulic source via the rotary joint 3, an oil passage is processed at the upper end of the support I 2, and the hydraulic cylinder I 31 and the hydraulic cylinders II 37 are connected to the oil passages on the L-shaped plate I 11 via joints and oil pipes. The guide rail I 41 and the guide rail II 42 are mounted on the bottom plate 32.

In actual use, after the wheel 15 is placed on the positioning plates 40 of the fixture, the airtight mechanisms 12 determines whether the wheel 15 is at the correct position by the feedback of the pressure generated by the pressing of the wheel 15 and exerted to the airtight mechanisms 12, the system gives an alarm if wrong, the servo motor II 29 drives the linear single-axis robot 17 through the decelerator II 28 if the position is correct to drive the movable plate 33 to adjust to a suitable height, during this process, the guide rail I 41, the guide rail II 42 and the linear single-axis robot 17 ensure that the movable plate 33 lifts stably, at this time, the hydraulic cylinder I 31 drives the power chuck 13 to work so that the clamping jaws 14 goes deep into the center hole of the wheel and expand the wheel 15, and after the wheel 15 is positioned radially and axially, the hydraulic cylinders II 37 drive the pressure blocks 39 to position and clamp the wheel 15 at the determined position. The machine tool spindle drives the tool to machine bolt holes after positioning and clamping, then the servo motor I 23 drives the power shaft II 22 and the L-shaped plate II 19 to rotate to an angle through the decelerator I 21, at the moment, hydraulic oil compresses the static friction plate 35 and the dynamic friction plate 34 via the oil passage inside the support I 2 to realize an indexing positioning function, and the machine tool spindle drives the tool to machine a valve hole after the angle is fixed.

## Claims

1. A stationary fixture for machining of an aluminum alloy wheel, the fixture being composed of a machine tool base (1), a support I (2), a rotary joint (3), an end cover I (4), nuts (5), a power shaft I (6), bearings (8), an end cover II (9), an L-shaped plate I (11), airtight mechanisms (12), a power chuck (13), clamping jaws (14), a wheel (15), L-shaped plate II (19), an end cover III (20), a decelerator I (21), a power shaft II (22), a servo motor I (23), an end cover IV (24), a support II (25), a coupling (26), a decelerator II (28), a servo motor II (29), a positioning column (30), a hydraulic cylinder I (31), a base (32), a movable plate (33), pressure blocks (39), positioning plates (40), wherein the support I (2) and the support II (25) are mounted on the machine tool base (1) by bolts, the power shaft I (6) is mounted inside a bearing seat at the upper end of the support I (2), a group of bearings (8) is mounted between the bearing seat and the power shaft I (6), the end cover I (4) is mounted on the left side of the bearing seat at the upper end of the support I (2) by screws, the end cover II (9) is fixed to the right side of the bearing seat at the upper end of the support I (2) by screws, the L-shaped plate I (11) is mounted on the power shaft I (6) by screws, and the rotary joint (3) is mounted at the left end of the power shaft I (6); the decelerator I (21) is mounted inside the support seat at the upper end of the support II (25), the servo motor I (23) is mounted at the right end of the decelerator I (21), the end cover IV (24) is mounted at the right end of the support seat at the upper end of the support II (25) by screws, the end cover III (20) is mounted at the left end of the support seat at the upper end of the support II (25), the power shaft II (22) is mounted at the output end of the decelerator I (21), and the L-shaped plate II (19) is mounted on the power shaft II (22) by screws; the base (32) is mounted on the L-shaped plate I (11) and the L-shaped plate II (19) by screws, the hydraulic cylinder I (31) is mounted on the base (32) via the positioning column (30) and screws, the power chuck (13) is mounted on the hydraulic cylinder I (31), a group of clamping jaws (14) is mounted on the power chuck (13), the output end of the servo motor II (29) is mounted on the input end of the decelerator II (28), the two groups of airtight mechanisms (12) are mounted on the movable plate (33), the four positioning plates (40) are mounted on the movable plate (33), the L-shaped plate I (11) is provided with a plurality of oil passages, the oil passages pass through the power shaft I (6) and are connected with a hydraulic source via the rotary joint (3),
**characterised in that** the fixture is further composed of a sealing ring I (7), a sealing ring II (10), a support plate I (16), a linear single-axis robot (17), a support plate II (18), a connecting plate (27), a dynamic friction plate (34), a static friction plate (35), a lip rubber sealing ring (36), hydraulic cylinders II (37), guide rails (38), a guide rail I (41) and a guide rail II (42), **in that** a nut (5) is mounted at the left end of each bearing (8) to position the inner ring of the bearing (8), the sealing ring I (7) is mounted between the end cover I (4) and the power shaft I (6), the sealing ring II (10) is mounted between the end cover II (9) and the power shaft I (6), the dynamic friction plate (34) is mounted on the L-shaped plate I (11), the static friction plate (35) and the lip rubber sealing ring (36) are mounted at the right end of the support I (2), the lip rubber sealing ring (36) is connected with an oil passage inside the support I (2), the support plate II (18) is mounted on the base (32) by screws, the linear single-axis robot (17) penetrates through the base (32) and is mounted on the support plate II (18), the output end of the decelerator II (28) is mounted on the output shaft of the linear single-axis robot (17) via the connecting plate (27) and the coupling (26), the support plate I (16) is simultaneously mounted on a slider of the linear single-axis robot (17) and the movable plate (33), the four guide rails (38) are mounted and fixed on the movable plate (33), the four groups of hydraulic cylinders II (37) are mounted on the guide rails (38), and the pressure blocks (39) are mounted at the output ends of the hydraulic cylinders II (37), an oil passage is processed at the upper end of the support I (2), and the hydraulic cylinder I (31) and the hydraulic cylinders II (37) are connected to the oil passages on the L-shaped plate I (11) via joints and oil pipes.

## Patentansprüche

1. Stationäre Klemmvorrichtung zur Bearbeitung eines Aluminiumlegierungsrades, wobei die Klemmvorrichtung aus einer Werkzeugmaschinenbasis (1), einem Träger I (2), einem Drehgelenk (3), einer Endabdeckung I (4), Muttern (5), einer Antriebswelle I (6), Lager (8), einer Endabdeckung II (9), einer L-förmigen Platte I (11), luftdichten Mechanismen (12), einem Kraftfutter (13), Spannbacken (14), einem Rad (15), einer L-förmigen Platte II (19), einer Endabdeckung III (20), einem Verzögerer I (21), einer Antriebswelle II (22), einem Servomotor I (23), einer Endabdeckung IV (24), einer Stütze II (25), einer Kupplung (26), einem Verzögerer II (28), einem Servomotor II (29), einer Positionierungssäule (30), einem Hydraulikzylinder I (31), einer Basis (32), einer beweglichen Platte (33), Druck-Blöcke (39), Positionierungsplatten (40) besteht, wobei der Träger I (2) und der Träger II (25) auf der Werkzeugmaschinenbasis (1) durch Schrauben montiert sind, wobei die Antriebswelle I (6) innerhalb eines Lagersitzes am oberen Ende des Trägers I (2) montiert ist, wobei eine Gruppe von Lagern (8) zwischen dem Lagersitz und der Antriebswelle I (6) montiert ist, wobei die Endabdeckung I (4) auf der linken Seite des Lagersitzes am oberen Ende des Trägers I (2) durch Schrauben montiert ist, wobei die Endabdeckung II (9) an der rechten Seite des Lagersitzes am oberen Ende der Stütze I (2) durch Schrauben befestigt ist, wobei die L-förmige Platte I (11) auf der Antriebswelle I (6) durch Schrauben montiert ist und das Drehgelenk (3) am linken Ende der Antriebswelle I (6) montiert ist ; wobei der Verzögerer I (21) innerhalb des Stützsitzes am oberen Ende der Stütze II (25) montiert ist, wobei der Servomotor I (23) am rechten Ende des Verzögerers I (21) montiert ist, wobei die Endabdeckung IV (24) am rechten Ende des Stützsitzes am oberen Ende der Stütze II (25) durch Schrauben montiert ist, wobei die Endabdeckung III (20) am linken Ende des Stützsitzes am oberen Ende der Stütze II (25) montiert ist, und wobei die Antriebswelle II (22) am Ausgangsende des Verzögerers I (21) montiert ist und die L-förmige Platte II (19) auf der Antriebswelle II (22) durch Schrauben montiert ist; wobei die Basis (32) auf der L-förmigen Platte I (11) und der L-förmigen Platte II (19) durch Schrauben montiert ist, wobei der Hydraulikzylinder I (31) auf der Basis (32) über die Positionierungssäule (30) und Schrauben montiert ist, wobei das Kraftfutter (13) am Hydraulikzylinder I (31) montiert ist und eine Gruppe von Klemmbacken (14) am Kraftfutter (13) montiert ist, wobei das Ausgangsende des Servomotors II (29) am Eingangsende des Verzögerers II (28) montiert ist, wobei die beiden Gruppen luftdichter Mechanismen (12) auf der beweglichen Platte (33) montiert sind, und wobei die vier Positionierungsplatten (40) auf der beweglichen Platte (33) montiert sind, wobei die L-förmige Platte I (11) mit mehreren Ölkanälen versehen ist und die Ölkanäle durch die Antriebswelle I (6) verlaufen und über das Drehgelenk (3) mit einer Hydraulikquelle verbunden sind;
**dadurch gekennzeichnet, dass** die Klemmvorrichtung weiterhin aus einem Dichtring I (7), einem Dichtring II (10), einer Stützplatte I (16), einem linearen einachsigen Roboter (17), einer Stützplatte II (18), einer Verbindungsplatte (27), einer dynamischen Reibungsplatte (34), einer statische Reibungsplatte (35), einem Lippengummidichtring (36), Hydraulikzylinder II (37), Führungsschienen (38), einer Führungsschiene I (41) und einer Führungsschiene II (42) besteht, wobei eine Mutter (5) am linken Ende jedes Lagers (8) montiert ist zur Positionierung des Innenrings des Lagers (8), wobei der Dichtring I (7) zwischen der Endabdeckung I (4) und der Antriebswelle I (6) montiert ist, wobei der Dichtring II (10) zwischen der Endabdeckung II (9) und der Antriebswelle I (6) montiert ist, wobei die dynamische Reibplatte (34) auf der L-förmigen Platte I montiert (11) ist, und die Haftreibungsplatte (35) und der Lippengummidichtring (36) am rechten Ende des Trägers I (2) montiert sind, wobei der Lippengummidichtring (36) mit einem Ölkanal im Inneren des Trägers I (2) verbunden ist, wobei die Stützplatte II (18) auf der Basis (32) durch Schrauben montiert ist, wobei der lineare einachsige Roboter (17) durch die Basis (32) dringt und auf der Trägerplatte II (18) montiert ist, wobei das Ausgangsende des Verzögerers II (28) auf der Ausgangswelle des linearen einachsigen Roboters (17) über die Verbindungsplatte (27) und die Kupplung (26) montiert ist; wobei die Trägerplatte I (16) gleichzeitig auf einem Schieber des linearen einachsigen Roboters (17) und der beweglichen Platte (33) montiert ist, wobei die vier Führungsschienen (38) auf der beweglichen Platte (33) montiert und befestigt sind, und die vier Gruppen von Hydraulikzylindern II (37) auf den Führungsschienen (38) montiert sind und die Druckblöcke (39) an den Ausgangsenden der Hydraulikzylinder II (37) angebracht sind; wobei ein Ölkanal am oberen Ende des Trägers I (2) bearbeitet wird, und die Hydraulikzylinder I (31) und die Hydraulikzylinder II (37) über Gelenke und Ölleitungen mit den Ölkanälen auf der L-förmigen Platte I (11) verbunden sind.

## Revendications

1. Dispositif fixe pour l'usinage d'une roue en alliage d'aluminium, le dispositif étant composé d'une base de machine-outil (1), d'un support I (2), d'un joint rotatif (3), d'un couvercle d'extrémité I (4), d'écrous (5), un arbre de transmission I (6), des roulements (8), un couvercle d'extrémité II (9), une plaque en L I (11), des mécanismes étanches à l'air (12), un mandrin de puissance (13), des mâchoires de serrage (14), une roue (15), un plaque en L II (19), un couvercle d'extrémité III (20), un décélérateur I (21), un arbre de transmission II (22), un servomoteur I (23), un couvercle d'extrémité IV (24), un support II (25), un accouplement (26), un décélérateur II (28), un servomoteur II (29), une colonne de positionnement (30), un cylindre hydraulique I (31), une base (32), une plaque mobile (33), blocs de pression (39), plaques de positionnement (40), danslequel le support I (2) et le support II (25) sont montés sur la base de machine-outil (1) par boulons, l'arbre de transmission I (6) est monté à l'intérieur d'un siège de roulement à l'extrémité supérieure du support I (2), un groupe de roulements (8) est monté entre le siège de roulement et l'arbre de transmission I (6), le couvercle d'extrémité I (4) est monté sur le côté gauche du siège de roulement à l'extrémité supérieure du support I (2) par vis, le couvercle d'extrémité II (9) est fixé sur le côté droit du siège de roulement à l'extrémité supérieure du support I (2) par vis, la plaque en L I (11) est montée sur l'arbre de transmission I (6) par vis, et le joint rotatif (3) est monté à l'extrémité gauche de l'arbre de transmission I (6); le décélérateur I (21) est monté à l'intérieur du siège de support à l'extrémité supérieure du support II (25), le servomoteur I (23) est monté à l'extrémité droite du décélérateur I (21), le couvercle d'extrémité IV (24) est monté à l'extrémité droite du siège de support à l'extrémité supérieure du support II (25) par vis, le couvercle d'extrémité III (20) est monté à l'extrémité gauche du siège de support à l'extrémité supérieure du support II (25), l'arbre de transmission II (22) est monté à l'extrémité de sortie du décélérateur I (21), et la plaque en L II (19) est montée sur l'arbre de transmission II (22) par vis; la base (32) est montée sur la plaque en L I (11) et la plaque en L II (19) par vis, le cylindre hydraulique I (31) est monté sur la base (32) via la colonne de positionnement (30) et des vis, le mandrin de puissance (13) est monté sur le cylindre hydraulique I (31), un groupe de mâchoires de serrage (14) est monté sur le mandrin de puissance (13), l'extrémité de sortie du servomoteur II (29) est montée sur l'extrémité d'entrée du décélérateur II (28), les deux groupes de mécanismes étanches à l'air (12) sont montés sur la plaque mobile (33), les quatre plaques de positionnement (40) sont montées sur la plaque mobile (33), la plaque en L I (11) est pourvue d'une pluralité de passages d'huile, les passages d'huile traversent l'arbre de transmission I (6) et sont reliés à une source hydraulique via le joint rotatif (3),
**caractérisé en ce que** le dispositif est encore composé d'une bague d'étanchéité I (7), une bague d'étanchéité II (10), une plaque de support I (16), un robot linéaire mono-axe (17), une plaque de support II (18), une plaque de connexion (27), une plaque de friction dynamique (34), une plaque de friction statique (35), une bague d'étanchéité en caoutchouc à lèvre (36), des cylindres hydrauliques II (37), des rails de guidage (38), un rail de guidage I (41) et un rail de guidage II (42), **en ce que** un écrou (5) est monté au extrémité gauche de chaque roulement (8) pour positionner la bague intérieure du roulement (8), la bague d'étanchéité I (7) est montée entre le couvercle d'extrémité I (4) et l'arbre de transmission I (6), la bague d'étanchéité II (10) est montée entre le couvercle d'extrémité II (9) et l'arbre de transmission I (6), a plaque de friction dynamique (34) est montée sur la plaque en L I (11), la plaque de friction statique (35) et la bague d'étanchéité en caoutchouc à lèvre (36) sont montées à l'extrémité droite du support I (2), la bague d'étanchéité en caoutchouc à lèvre (36) est reliée à un passage d'huile à l'intérieur du le support I (2), la plaque de support II (18) est montée sur la base (32) par vis, le robot linéaire mono-axe (17) pénètre à travers la base (32) et est monté sur la plaque support II (18), l'extrémité de sortie du décélérateur II (28) est montée sur le arbre de sortie du robot linéaire mono-axe (17) via la plaque de connexion (27) et l'accouplement (26), la plaque support I (16) est montée simultanément sur un coulisseau du robot linéaire mono-axe (17) et de la plaque mobile (33), les quatre rails de guidage (38) sont montés et fixés sur la plaque mobile (33), les quatre groupes de cylindres hydrauliques II (37) sont montés sur les rails de guidage (38), et les blocs de pression (39) sont montés aux extrémités de sortie des cylindres hydrauliques II (37); un passage d'huile est traité à l'extrémité supérieure du support I (2), et le cylindre hydraulique I (31) et les cylindres hydrauliques II (37) sont reliés aux passages d'huile sur la plaque en L I (11) via des joints et des conduites d'huile.
